# EUROPEAN PATENT SPECIFICATION

(11) **EP 1 678 986 B1**
(45) Date of publication and mention of the grant of the patent: **23.05.2007**
(21) Application number: 04795318.7
(22) Date of filing: 15.10.2004
(51) Int. Cl.: H05B 6/02, H05B 6/04, H05B 6/14, B29C 65/02

(54) **INDUCTIVE HEATING DEVICE INCLUDING AN INDUCTIVE COUPLING ASSEMBLY**
INDUKTIVE HEIZEINRICHTUNG MIT EINER INDUKTIVEN KOPPLUNGSBAUGRUPPE
DISPOSITIF DE CHAUFFAGE A INDUCTION COMPRENANT UN ENSEMBLE COUPLAGE INDUCTIF

(30) Priority: 31.10.2003 US 698286
(43) Date of publication of application: 12.07.2006
(73) Proprietor: 3M Innovative Properties Company, St. Paul, Minnesota 55133-3427 (US)
(72) Inventor: RING, Edmund, J., Saint Paul, Minnesota 55133-3427 (US)
(74) Representative: Hill, Cecilia Ann
(86) International application number: PCT/US2004/034133
(87) International publication number: WO 2005/046290

(56) References cited:
- WO-A-01/30117
- US-A- 4 413 231
- US-A- 5 138 136
- US-A- 5 374 809
- US-B1- 6 288 375

## Description

### Technical Field

The present invention generally relates to inductive heating devices, and in particular, the present invention relates to an inductive heating device having an inductive coupling assembly and a method of heating a target substrate.

### Background of the Invention

Induction heaters are employed as one way of heating a work piece in a thermally rapid manner. For example, in the automotive industry, induction heaters are employed to accelerate the curing of thermally responsive bonding materials positioned between assembly components (work pieces). In particular, one useful induction heater is a "spot welder" where a heated work surface delivers heat to a small area (i.e., a spot). Another useful induction heater is a "pancake heater" capable of inductively heating a large, often circular, area. Because induction heaters experience little resistive heating losses, induction heaters are more efficient than resistively heated elements. As a result, induction heating devices provide a rapid thermal response, which is particularly desirable for high production-rate assembly lines.

However, the known induction heating devices have a heating surface that is attached to a power supply via a "hardwired" cable. For example, the prior art induction heating devices have a power supply having a primary coil, and a secondary coil separated from the primary coil, usually positioned near a heating surface. A cable having an inductor core spans between the primary coil and the secondary coil. In this regard, the cable is electrically and permanently hardwired between the primary coil and the secondary coil.

During use, a high frequency alternating current (A/C) is delivered from the power supply to the primary coil creating a magnetic field about the primary coil. The magnetic field is transferred along the inductor core to the secondary coil, which is connected to the work surface. The presence of the magnetic field induces a voltage in the secondary coil and work surface. As a result, any change in the high frequency A/C delivered to the primary coil affects the current and the voltage in the secondary coil via a property known as mutual inductance. This mutual inductance, as typically employed in electrical transformers, relies upon ferromagnetic properties of the iron inductor core to efficiently raise or lower the A/C voltages and currents in the secondary coil. The hardwired connection between the power supply and the work surface via the cable, while effective, limits the usefulness of the induction heating device. For example, as the work surface becomes worn with use, a complete system of power supply, primary and secondary coils, cable, and inductor core must be replaced, even though the other components may not be worn.

In addition to the limited utility of hardwired cables, the inductor core can be a source of power loss. The typical inductor core is cylindrical in shape and is characterized by magnetic field losses through the surface area of the core. As a result, a portion of the magnetic field is naturally lost to free space around the inductor core. This portion of the magnetic field that is lost from the inductor core has the potential to induce undesirable currents in metal objects, which can be a concern for health and safety.

The prior art induction heaters rely upon the hardwiring of the cable between the power supply and the work surface. This necessitates replacing complete systems when one component becomes worn reduces the efficiency of fast and flexible assembly lines currently employed in the automotive industry. Additionally, the prior art inductor cores permit a portion of the magnetic field to be lost to the environment, and it is thus unavailable for inducing voltage in the secondary coils. Consequently, a portion of the magnetic field strays from the inductor core and has the potential to induce undesired currents in objects other than the work piece.

### Summary of the Invention

One embodiment of the present invention provides an inductive heating device having a power supply, an inductive coupling assembly, and an inductor core. The power supply includes a primary coil. The inductive coupling assembly includes an inductive coupling sleeve coupled to a first end of a cable assembly, where the inductive coupling sleeve has a secondary coil positioned therein. In this regard, the inductive coupling assembly is configured to removably couple the cable assembly to the power supply in inductively coupling the inductor core between the primary coil and the secondary coil.

In one aspect, the inductive heating device is provided with an inductively heated work head that is interchangeably connected to a second end of the cable assembly.

The inductor core can be attached to the power supply and extend from the primary coil. In another aspect, the inductor core is attached to the coupling sleeve and extends from the secondary coil.

In one aspect, the inductor core includes a first portion and a second portion. The first portion and the second portion of the inductor core are configured to be separably coupled to one another. In one aspect, the first portion of the inductor core is located at the power supply, and the second portion of the inductor core is located at the coupling sleeve within the secondary coil.

In one aspect, the first portion and the second portion of the inductor core couple to form a cylindrically shaped inductor core. In another aspect, the first portion and the second portion of the inductor core couple to form a toroid shaped inductor core.

The inductive heating device can also include a locking mechanism configured to couple the cable assembly to the power supply. In one aspect, the locking mechanism includes a first locking member connected to the power supply and a second locking member connected to the inductive coupling sleeve, such that coupling the first locking member to the second locking member forms a separable locking connection.

In another aspect, the first locking member is formed as part of the housing of the power supply.

In one preferred aspect, the locking mechanism is a twist and lock connector.

Another embodiment of the present invention provides a method of inductively heating a target substrate. The method includes providing a power supply including a primary coil and a first portion of inductor core. The method additionally includes coupling a sleeve positioned at a first end of a cable assembly and including a secondary coil and a second portion of inductor core to the power supply such that the first and second portions of the inductor core inductively couple. The method further includes activating the power supply to inductively heat a work head attached to a second end of the cable assembly.

In one aspect, the step of coupling the sleeve positioned at the first end of the cable assembly to the power supply includes removably locking the first end of the cable assembly to the power supply. In another aspect, the step of coupling the sleeve to the power supply includes removably locking the first end of the cable assembly to the power supply by manipulating a twist and lock connector.

In one aspect, the step of coupling the cable assembly to the power supply includes mating first and second portions of the inductor core to form a toroidal inductor core.

In another embodiment of the present invention, an inductive heating device includes a power supply, a work head, and an inductive coupling assembly configured to removably couple the power supply to the work head, the inductive coupling assembly including a primary coil, a secondary coil, and an inductor core. In this regard, the power supply is electrically coupled to the primary coil, the secondary coil is electrically coupled to the work head, and the primary and secondary coils are configured to be magnetically coupled through the inductor core when the inductive coupling assembly is coupled.

In one aspect, the inductor core is attached within and extends from the primary coil.

In another aspect, the inductor core is attached within and extends from the secondary coil.

In another aspect, the inductor core includes a first portion and a second portion, the first portion and the second portion configured to be separably mateable. In a preferred embodiment, the first portion and the second portion of the inductor core mate to form a toroid shaped inductor core.

In yet another embodiment of the present invention, an inductive heating device includes a power supply including a primary coil, a cable assembly, and an inductor core. The cable assembly includes a first end coupled to a secondary coil and a second end coupled to a work head. Means for removably coupling the cable assembly to the power supply is provided such that the inductor core couples between the primary coil and the secondary coil.

### Brief Description of the Drawings

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Figure 1 is a perspective view of an inductive heating device in accordance with one embodiment of the present invention.
Figure 2 is a perspective view a heating device assembly according to one embodiment of the present invention.
Figure 3 is a perspective view of a heating device assembly according to another embodiment of the present invention.
Figure 4 is a perspective view of an inductive heating device having separably mateable inductor cores in accordance with one embodiment of the present invention.
Figure 5 is a perspective view of a separably mateable inductor core in accordance with one embodiment of the present invention.
Figure 6 is a perspective view of a separably mateable toroidal inductor core in accordance with one embodiment of the present invention.
Figure 7 is a perspective view of an inductive coupling sleeve provided with a locking mechanism in accordance with one embodiment of the present invention.
Figure 8 is a perspective view of an alternative inductive heating device in accordance with another embodiment of the present invention.

### Detailed Description

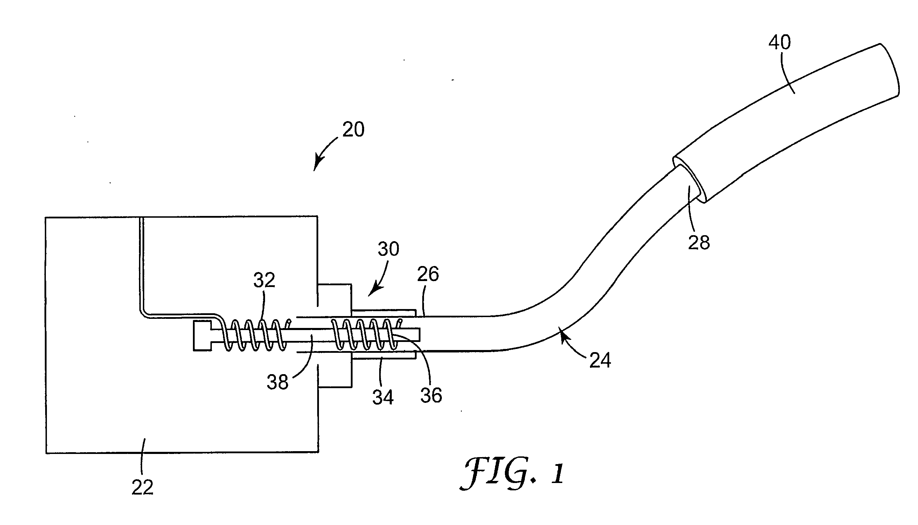

An inductive heating device according to one embodiment of the present invention is generally illustrated at 20 in Figure 1. The inductive heating device 20 includes a power supply 22 and a cable assembly 24. The cable assembly 24 includes a first end 26 and a second end 28. An inductive coupling assembly 30 is coupled to the first end 26 of cable assembly 24 and is configured to removeably couple the cable assembly 24 to the power supply 22. A primary coil 32 is positioned at, and electrically connected to, the power supply 22. The inductive coupling assembly 30 is configured to removeably couple the cable assembly 24 to the power supply 22 via an inductive coupling sleeve 34. To this end, the inductive coupling assembly 30 includes a secondary coil 36 positioned adjacent the first end 26 of the cable assembly 24 such that the primary coil 32 and the secondary coil 36 are aligned about an inductor core 38 when the inductive coupling assembly 30 is coupled to the power supply 22. During operation, a work head 40 is coupled to the second end 28 of the cable assembly 24 such that the work head is inductively heated via mutual inductance, as described below.

The inductive heating device 20 delivers a non-contact supply of power to the heated work head 40, and thus to a target substrate of interest. In the exemplary embodiment shown in Figure 1, the power supply 22 provides an alternating current to the primary coil 32. The alternating current in the primary coil 32 creates a magnetic field in the inductor core 38 that induces a voltage in the secondary coil 36. As a result, the power supply 22 provides alternating current (A/C) to the primary coil 32 that induces a voltage in the secondary coil 36 such that power is delivered to the work head 40 in a non-contact electromagnetic manner.

The power supply 22 is a high frequency power supply, preferably having an output frequency greater than 1 kilohertz. In one embodiment, the power supply 22 has an output frequency of between 10 kilohertz and 400 kilohertz and can supply more than 100 amperes of alternating current at an AC line voltage level of 120 volts. However, other configurations of alternating current and voltage are possible. Upon reading and understanding this disclosure, those skilled in the electrical arts will recognize other suitable current and voltage configurations for power supply 22.

The primary coil 32 and the secondary coil 36 comprise multiple wraps, or windings, of conductive wire. The number of windings of wire around the secondary coil 36 in relation to the number of windings of wire around the primary coil 32 is known as a turns ratio. Mutual inductance induces a voltage in the secondary coil 36 that corresponds to the voltage the primary coil 32 by a proportion equal to the turns ratio. In particular, the voltage induced in the secondary coil is equal to the voltage in the primary coil multiplied by the turns ratio. As a result, the desired voltage in the secondary coil can be controlled as a function of the voltage in the primary coil 32 and the turns ratio. Upon reading this disclosure, those skilled in the electrical arts will recognize suitable choices for the turns ratio that will result in the desired induced voltage and current in the secondary coil 36.

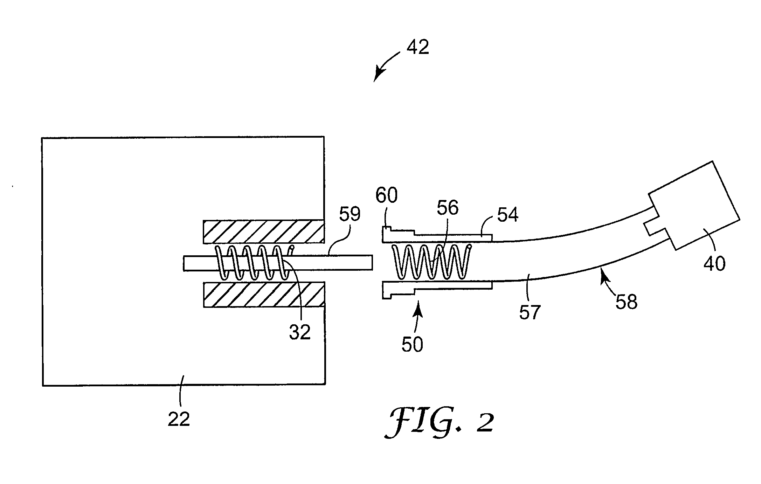

An inductive heating device including an inductive coupling assembly 50 in accordance with one embodiment of the present invention is illustrated at 42 in Figure 2. The inductive coupling assembly 50 comprises a sleeve 54 encompassing the secondary coil 56 and is positioned at a first end 57 of cable assembly 58. The inductive coupling assembly 50 is configured to couple with the power supply 22 via a locking mechanism 60. The primary coil 32 is positioned within the power supply 22 along with an inductor core 59 that associates with and extends from the primary coil 32. As illustrated in Figure 2, the inductor core 59 also extends a distance beyond the power supply 22 such that the inductive coupling assembly 50 encompasses the inductor core 59 when the inductive coupling assembly 50 couples to the power supply 22. Consequently, the cable assembly 58 (including the inductive coupling assembly 50) can be interchangeably connected to the power supply 22. In particular, the inductive coupling assembly 50 permits rapid and convenient exchange of the cable assembly 58 (and any work head 40 attached to the cable assembly 58) in optimizing the utility of the inductive heating device 42. Specifically, the inductive coupling assembly 50 in combination with the cable assembly 58 enables a rapid replacement of either a worn cable assembly 58, or replacement of both the cable assembly 58 and the work head 40.

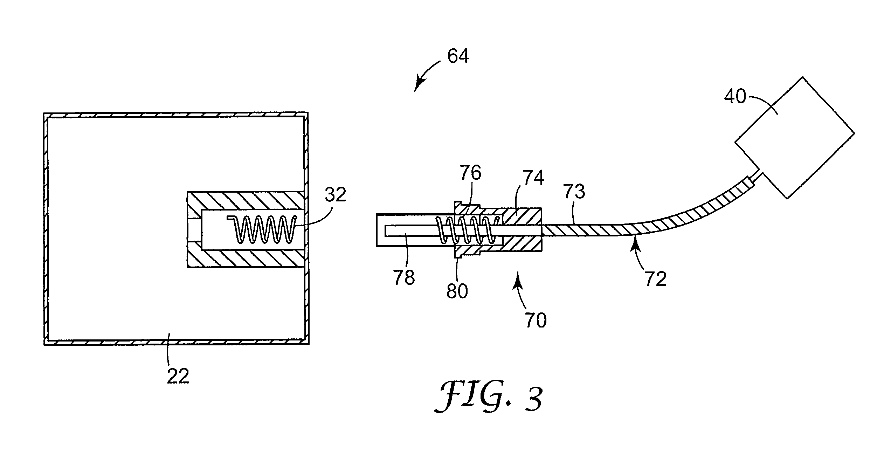

An inductive heating device according to another embodiment of the present invention is generally illustrated at 64 in Figure 3. The inductive heating device 64 includes a power supply 22 and an interchangeable cable assembly 72. An inductive coupling assembly 70 is attached to a first end 73 of the interchangeable cable assembly 72 and includes an inductive coupling sleeve 74 that extends beyond a secondary coil 76 and surrounds an inductor core 78. In this way, the inductive coupling assembly 70 is configured to removeably couple the cable assembly 72 to the power supply 22. The inductor core 78 extends beyond the secondary coil 76 and is configured to engage with the primary coil 32 of the power supply 22 when the inductive coupling sleeve 74 is removably secured to the power supply 22 via a locking mechanism 80. Consequently, the interchangeable cable assembly 72 can be rapidly and conveniently exchanged through the manipulation of the inductive coupling assembly 70. Figure 2 illustrates the inductor core 59 extending beyond the primary coil 32 from the power supply 22, whereas Figure 3 illustrates the inductor core 78 extending beyond the secondary coil 76 of the inductive coupling assembly 70. In any regard, the cable assembly 58 or 72 is configured to be removably and inductively coupled with the power supply 22. One benefit of the embodiments illustrated in Figure 2 or Figure 3 is that the power connection is maintained at the power supply 22 such that the high voltage of the power supply is located away from the work heads 40.

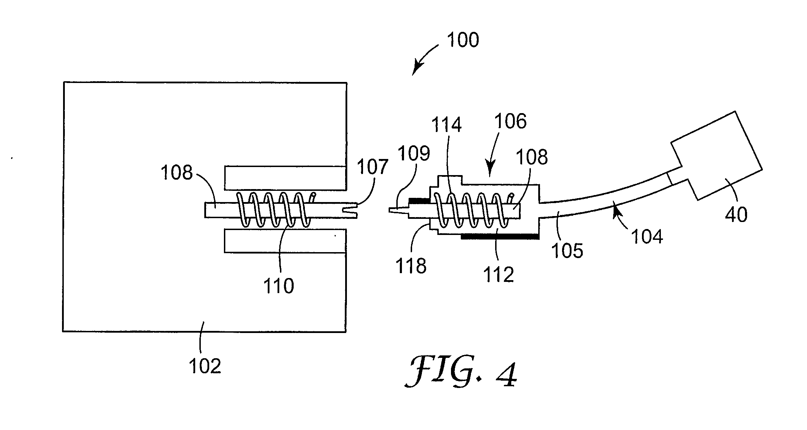

An inductive heating device provided with a separably mateable inductor core according one embodiment of the present invention is generally illustrated at 100 in Figure 4. Inductive heating device 100 comprises a power supply 102 and a cable assembly 104 having a first cable end 105. An inductive coupling assembly 106 is coupled to the first cable end 105 and is configured to removably secure the cable assembly 104 to the power supply 102. Additionally, when the inductive coupling assembly 106 couples to the power supply 102, a first portion 107 of a separable inductor core 108 is mated to, and inductively coupled with, a second portion 109 of the inductor core 108. A primary coil 110 is positioned within the power supply 102 such that the first portion 107 of the inductor core 108 is positioned within the primary coil 110. The inductive coupling assembly 106 comprises a sleeve 112 projecting over and surrounding a secondary coil 114 that is wound about the second portion 109 of the inductor core 108. Consequently, the inductive coupling assembly 106 comprises the secondary coil 114 and the second portion 109 of the inductor core 108 and is configured to couple to the power supply 102 such that the first portion 107 and the second portion 109 of the separable inductor core 108 inductively mate. Additionally, a locking element 118 is provided at a forward portion of the sleeve 112 to removably secure the inductive coupling assembly 106 (and, hence, the cable assembly 104) to the power supply 102. As a result, the cable assembly 104 is separable from and easily interchanged with the power supply 102. Interchangeable cable assemblies 104 provide increased flexibility in the selection of work heads 40, and also permit the replacement of the cable assembly 104 (and the work head 40) in instances where the components become worn with use. Figure 4, therefore, illustrates one preferred embodiment of separable and inductively mateable inductor core 108 portions 107 and 109 that facilitate the exchange of cable assemblies 104 with the inductive heating device 100.

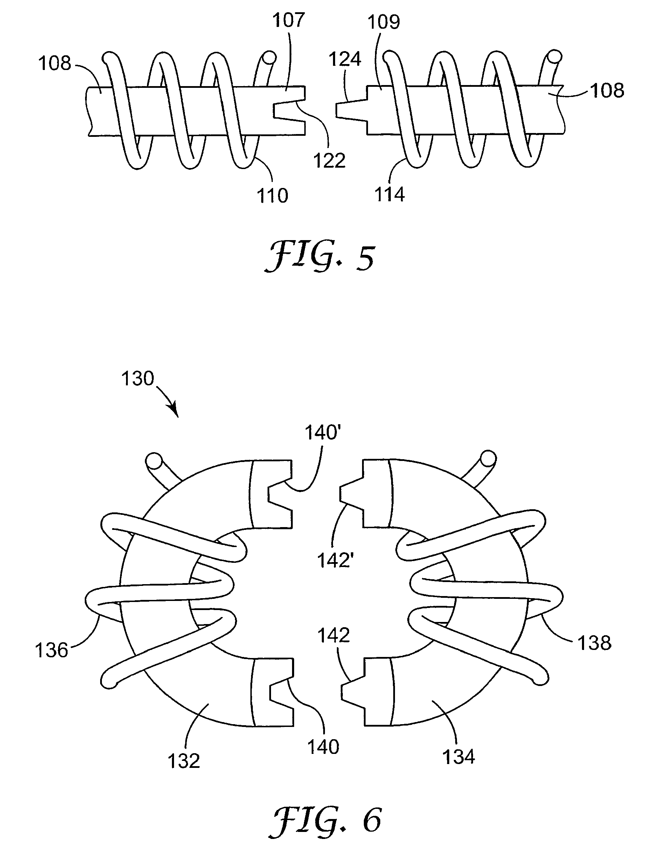

The separable inductor core 108 increases the efficiency of mutual inductance and the flexibility of the inductive heating device 100 shown in Figure 4. The function of the separable inductor core 108 is better illustrated in Figure 5. Figure 5 illustrates the first portion 107 and the second portion 109 of the inductor core 108 just prior to being inductively mated. In particular, the first portion 107 includes a primary coil 110 having several windings about the exterior of the separable inductor core 108. Similarly, the second portion 109 includes the secondary coil 114 having multiple windings about an exterior portion thereof. In one exemplary embodiment, the first portion 107 of the separable inductor core 108 includes a female surface 122 configured to mate with a male surface 124 of the second portion 109 of separable inductor core 108. As the two separable portions 107 and 109 of the inductor core 108 are brought together to form a connection, the female surface 122 accepts and inductively couples with the male surface 124 to form a continuous, but separable, inductor core 108. In one preferred embodiment, the separable inductor core 108 forms a cylinder as shown in Figure 5. Female surface 122 and male surface 124 represent one suitable mating surface connection. Other suitable geometry for surfaces 122 and 124 include, but is not limited to, rectangular, trapezoidal, concave/convex, threaded, pin and slot or any mutually interactive geometric surfaces. Upon reading this disclosure, those skilled in the art of mutual inductance will readily recognize that other suitable mating surfaces could be employed to inductively mate the separable inductor core portions 107 and 109.

Separable inductor core portions that couple to form a toroid are shown at 130 in Figure 6. The separable toroidal inductor core 130 includes a first portion 132 and a second portion 134. As illustrated in Figure 6, the first portion 132 and the second portion 134 are shown just prior to being inductively coupled. The first portion 132 of inductor core 130 includes a primary coil 136 having several windings about an exterior surface thereof. Similarly, the second portion 134 of inductor core 130 includes a secondary coil 138 including several windings about an exterior portion thereof. To facilitate the inductive coupling of the separable inductor core portions 132 and 134, a pair of suitable mating interfaces is provided. For example, the first portion 132 of inductor core 130 is provided with a female surface 140 configured to accept and couple with a male surface 142 of the second portion 134 of the inductor core 130. Similarly, a second female surface 140' is configured to accept and couple with a second male surface 142'. Upon coupling, the female surfaces 140 and 140' accept the male surfaces 142 and 142' and the first and second portions 132 and 134 of the separably mateable inductor core 130 form a toroid (i.e., a doughnut). it is noted that other suitable geometry for surfaces 140 and 142, and 140' and 142' include, but is not limited to, rectangular, trapezoidal, concave/convex, threaded, pin and slot or any mutually interactive geometric surfaces. Upon reading this disclosure, those skilled in the art of mutual inductance will readily recognize that other suitable mating surfaces could be employed to inductively mate the separable inductor core portions 132 and 134.

As illustrated in Figure 6, the toroid defines a continuously closed surface (i.e., no beginning or end segment) capable of containing the magnetic field of the inductive heating device 100 (Figure 4). As a result, the toroidal inductor core 130 is capable of containing the magnetic field lines, and hence analogous to a complete electrical circuit, such that magnetic field lines are not lost to the surrounding environment. This is beneficial when the inductive heating device 100 employs high current and high voltage such that stray portions of the magnetic field could induce a secondary voltage in an adjacent electrically conductive object that is not the target substrate. Consequently, the toroidal inductor core 130 is both a more efficient mutual inductor and a more controlled inductive heating device 100.

Inductive heating devices, for example the inductive heating device 100, relies upon ferromagnetic properties of an iron-based inductor core to efficiently raise or lower the alternating current voltages in the secondary coil, for example the secondary coils 114 or 135. The ferromagnetic properties of inductor cores is well known to those skilled in the art of inductive heating devices. Suitable materials for the separable inductor cores, for example separable inductor cores 108 and 130, include iron alloys comprising metal oxides selected from the group consisting of ferric oxides, oxides of manganese, oxides of nickel, and oxides of zinc.

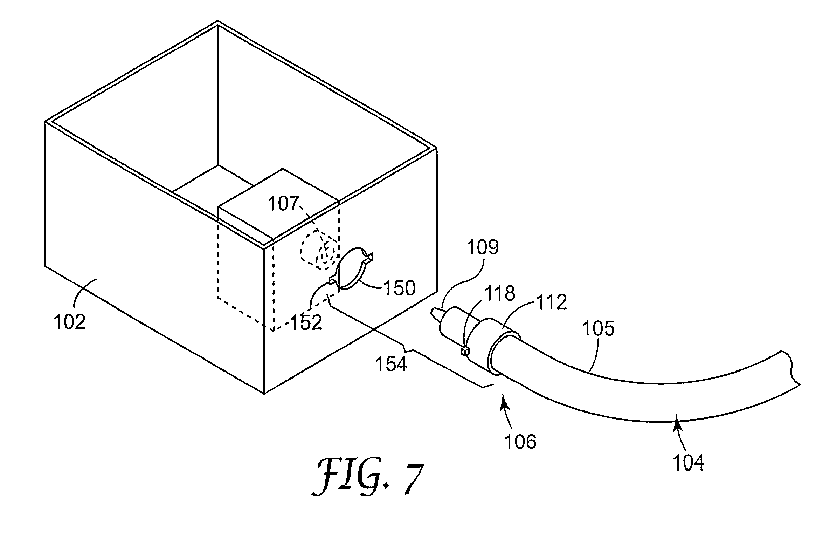

As described above, the inventive inductive heating devices of the various embodiments of the present invention provide easy and convenient exchange of both work head assemblies and/or cable assemblies. In furtherance of this useful and novel feature, a locking mechanism is provided that is configured to couple the cable assembly to the power supply, as better illustrated in Figure 7. The inductive coupling assembly 106 is provided with a sleeve 112 including a locking element 118. The locking element 118 is configured to couple the cable assembly 104 to the power supply 102 by interfacing and locking with a complimentary locking slot 150. The complimentary locking slot 150 located at the power supply 102 includes at least one reception groove 152 suited for accepting the protruding locking element 118. Accordingly, the locking element 118 in combination with the complimentary locking slot 150 and the reception groove 152 combine to form a locking mechanism 154. The locking mechanism 154 enables removably secure attachment of the cable assembly 104 to the power supply 102. Additionally, the locking mechanism 154 couples the cable assembly 104 (via the inductive coupling assembly 106) to the power supply 102 such that the first portion 107 of the inductor core and the second portion 109 of the inductor core are inductively mated. Note that the locking mechanism 154 could be positioned at the second end (not shown) of the cable assembly 104 for attachment and removal of the work head (not shown). In one preferred embodiment, the locking mechanism 154 is a twist and lock connector. Other embodiments of locking mechanisms include, but are not limited to, spring loaded clamps, clips, latches, threaded sleeves that thread, or screw, into the power supply 102, or any of the various suitable means for securely coupling the cable assembly 104 to the power supply 102.

The induction heating devices described above deliver energy in a non-contact manner to the interchangeable work head 40. The interchangeable work head 40 provides a heated surface that can be employed to rapidly heat a work piece. For example, interchangeable work head 40 can be employed to accelerate the curing of thermally responsive bonding materials positioned between automotive body panels. In this regard, the work head 40 can be configured to be a spot welder (a small area is heated), a pan cake heater (a large area is heated), a flexible and reshapeable cable (a non-linear area is heated), or any surface that is selected as a target substrate where rapid thermal heating is desired. After reading and understanding this disclosure, those skilled in the art of induction heating devices will recognize that the work head 40 can be adapted to assume a variety of shapes and sizes, both conformable and rigid in style.

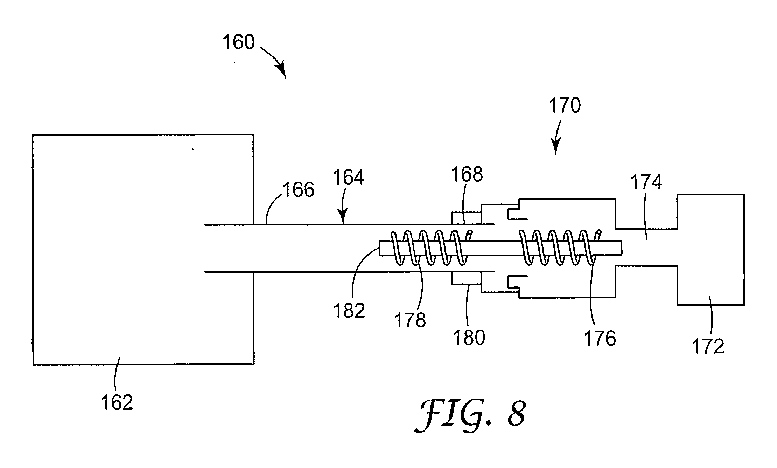

The embodiments of the inductive heating device illustrated in Figures 1-7 beneficially locate the high voltage and the high current of the heating device near the power supply unit (22 or 102). In an alternate embodiment, the cable assembly is rigidly attached to the power supply such that the high voltage and high current out of the power supply is coupled to the work head at a remote position, as illustrated generally at 160 in Figure 8. In Figure 8, a power supply 162 is provided having a cable assembly 164 rigidly connected at a first cable end 166. A second cable end 168 extends away from the power supply and is provided with an inductive coupling assembly 170 that is configured to removably and inductively couple the cable assembly 164 to an interchangeable work head 172 having a flexible shaft 174 including a secondary coil 176. In this manner, the interchangeable work head 172 comprises the flexible shaft 174 and the secondary coil 176 and forms a replaceable assembly offering rapid work head 172 exchange. The inductive coupling assembly 170 includes a primary coil 178 positioned at the second cable end 168, an inductive coupling sleeve 180, and an inductor core 182. As illustrated in Figure 8, the inductive coupling assembly 170 is configured to removably and inductively couple the cable assembly 164 to the flexible shaft 174 of the interchangeable work head 172. Accordingly, the high voltage and the high current from the power supply 162 is extended outwardly to the region where the inductive coupling assembly 170 and work head 172 are located.

Figure 8 illustrates that the primary coil 178 is located at the second cable end 168, and the secondary coil 176 is positioned within the flexible shaft 174 associated with the interchangeable work head 172. In one embodiment, the inductor core 182 can be attached to the second cable end 168 and extend from the primary coil 178 in a fashion similar to the inductor core 59 extending beyond the primary coil 32 in Figure 2. Alternately, the inductor core 182 can be attached to the flexible shaft 174 and extend beyond the secondary coil 176 in a fashion similar the inductor core 78 extending beyond the secondary coil 76 in Figure 3. Additionally, the inductive coupling assembly 170 can be provided with separable inductor cores. When separable inductor cores are employed, the inductor cores will comprise a first portion and a second portion, where the first portion and the second portion are separably mateable in a fashion similar to Figure 4. For example, in one embodiment the first portion of the inductor core can be located at the second end of the cable assembly within the primary coil and the second portion of the inductor core can be located at the interchangeable work head within the secondary coil. The first and second portions of the separable inductor core are mated as the inductive coupling assembly 170 is secured. In one preferred embodiment, the first portion of the separable inductor core and the second portion of the separable inductor core mate to form a toroid in a fashion similar to that represented in Figure 6. In another embodiment, a locking mechanism is provided to secure the cable assembly to the interchangeable work head. In a preferred embodiment, the locking mechanism is a twist and lock connector similar to the locking mechanism 154 shown in Figure 7.

Numerous characteristics and advantages of the invention have been set forth in the foregoing description. It will be understood, of course, that this disclosure is only illustrative. Changes can be made in details, particularly in matters of shape, size and arrangement of parts without exceeding the scope of the invention. The invention scope is defined by the language in which the following claims are expressed.

## Claims

1. An inductive heating device (22) comprising:
a power supply (22) including a primary coil (32);
an inductive coupling assembly (30) including an inductive coupling sleeve (34) coupled to a first end (26) of a cable assembly (24), the inductive coupling sleeve having a secondary coil (36) positioned therein; and
an inductor core (38),
wherein the inductive coupling assembly is configured to removably couple the cable assembly to the power supply in inductively coupling the inductor core between the primary coil and the secondary coil.

2. The inductive heating device of claim 1, further comprising an inductively heated work head (50) interchangeably connected to a second end of the cable assembly.

3. The inductive heating device of claim 1, wherein the inductor core is attached to the power supply and extends from the primary coil.

4. The inductive heating device of claim 1, wherein the inductor core is attached to the coupling sleeve and extends from the secondary coil.

5. The inductive heating device of claim 1, wherein the inductor core includes a first portion and a second portion, the first portion and the second portion configured to be separably mateable.

6. The inductive heating device of claim 5, wherein the first portion of the inductor core is located at the power supply within the primary coil and the second portion of the inductor core is located at the coupling sleeve within the secondary coil.

7. The inductive heating device of claim 5, wherein the first portion of the inductor core and the second portion of the inductor core couple to form a toroid.

8. The inductive heating device of claim 5, wherein the first portion of the inductor core and the second portion of the inductor core couple to form a cylinder.

9. The inductive heating device of claim 1, wherein the inductive coupling assembly includes a locking mechanism configured to secure the cable assembly to the power supply.

10. The inductive heating device of claim 9, wherein the locking mechanism is a twist and lock connector.

11. The inductive heating device of claim 9, wherein the locking mechanism includes a first locking member connected to the power supply and a second locking member connected to the inductive coupling sleeve such that coupling the first locking member to the second locking member forms a separable locking connection.

12. The inductive heating device of claim 11, wherein the first locking member is formed as part of a housing of the power supply.

## Patentansprüche

1. Induktive Heizeinrichtung (22), mit:
einer Stromversorgung (22), die eine Primärspule (32) aufweist;
einer induktiven Kopplungsbaugruppe (30), die eine induktive Kopplungshülse (34) aufweist, die an ein erstes Ende (26) einer Kabelbaugruppe (24) gekoppelt ist, wobei die induktive Kopplungshülse eine darin positionierte Sekundärspule (36) aufweist; und
einem Induktionsspulenkern (38),
wobei die induktive Kopplungsbaugruppe konfiguriert ist, die Kabelbaugruppe durch induktives Koppeln des Induktionsspulenkerns zwischen der Primärspule und der Sekundärspule an die Stromversorgung zu koppeln.

2. Induktive Heizeinrichtung nach Anspruch 1, ferner aufweisend einen induktiv erhitzten Arbeitskopf (50), der austauschbar mit einem zweiten Ende der Kabelbaugruppe verbunden ist.

3. Induktive Heizeinrichtung nach Anspruch 1, wobei der Induktionsspulenkern an der Stromversorgung angebracht ist und sich von der Primärspule aus erstreckt.

4. Induktive Heizeinrichtung nach Anspruch 1, wobei der Induktionsspulenkern an der Kopplungshülse angebracht ist und sich von der Sekundärspule aus erstreckt.

5. Induktive Heizeinrichtung nach Anspruch 1, wobei der Induktionsspulenkern einen ersten Abschnitt und einen zweiten Abschnitt aufweist, wobei der erste Abschnitt und der zweite Abschnitt konfiguriert sind, separat gekoppelt zu werden.

6. Induktive Heizeinrichtung nach Anspruch 5, wobei der erste Abschnitt des Induktionsspulenkerns sich an der Stromversorgung innerhalb der Primärspule befindet und der zweite Abschnitt des Induktionsspulenkerns sich an der Kopplungshülse innerhalb der Sekundärspule befindet.

7. Induktive Heizeinrichtung nach Anspruch 5, wobei der erste Abschnitt des Induktionsspulenkerns und der zweite Abschnitt des Induktionsspulenkerns gekoppelt werden, um einen Toroid zu bilden.

8. Induktive Heizeinrichtung nach Anspruch 5, wobei der erste Abschnitt des Induktionsspulenkerns und der zweite Abschnitt des Induktionsspulenkerns gekoppelt werden, um einen Zylinder zu bilden.

9. Induktive Heizeinrichtung nach Anspruch 1, wobei die induktive Kopplungsbaugruppe einen Verriegelungsmechanismus aufweist, der konfiguriert ist, die Kabelbaugruppe an der Stromversorgung zu sichern.

10. Induktive Heizeinrichtung nach Anspruch 9, wobei der Verriegelungsmechanismus ein Twist-and-Lock-Verbinder ist.

11. Induktive Heizeinrichtung nach Anspruch 9, wobei der Verriegelungsmechanismus ein mit der Stromversorgung verbundenes erstes Verriegelungsglied und ein mit der induktiven Kopplungshülse verbundenes zweites Verriegelungsglied derart aufweist, daß das Koppeln des ersten Verriegelungsglieds an das zweite Verriegelungsglied eine trennbare Verriegelungsverbindung bildet.

12. Induktive Heizeinrichtung nach Anspruch 11, wobei das erste Verriegelungsglied als Teil eines Gehäuses der Stromversorgung ausgebildet ist.

## Revendications

1. Dispositif de chauffage à induction (22) comprenant :
une alimentation (22) comprenant une bobine primaire (32) ;
un ensemble couplage inductif (30) comprenant un manchon de couplage inductif (34) couplé à une première extrémité (26) d'un ensemble câble (24), ce manchon de couplage inductif ayant une bobine secondaire (36) positionnée à l'intérieur de celui-ci ; et
un noyau inducteur (38),
l'ensemble de couplage inductif étant configuré de façon à coupler de manière amovible l'ensemble câble à l'alimentation en couplant inductivement le noyau inducteur entre la bobine primaire et la bobine secondaire.

2. Dispositif de chauffage à induction selon la revendication 1, comprenant en outre une tête de travail chauffée inductivement (50) connectée de façon interchangeable à une deuxième extrémité de l'ensemble câble.

3. Dispositif de chauffage à induction selon la revendication 1, le noyau inducteur étant attaché à l'alimentation et s'étendant depuis la bobine primaire.

4. Dispositif de chauffage à induction selon la revendication 1, le noyau inducteur étant attaché au manchon de couplage et s'étendant depuis la bobine secondaire.

5. Dispositif de chauffage à induction selon la revendication 1, le noyau inducteur comprenant une première portion et une deuxième portion, la première portion et la deuxième portion étant configurées de façon à pouvoir être couplées de manière séparable.

6. Dispositif de chauffage à induction selon la revendication 5, la première portion du noyau inducteur étant située au niveau de l'alimentation à l'intérieur de la bobine primaire et la deuxième portion du noyau inducteur étant située au niveau du manchon de couplage à l'intérieur de la bobine secondaire.

7. Dispositif de chauffage à induction selon la revendication 5, la première portion du noyau inducteur et la deuxième portion du noyau inducteur se couplant l'une à l'autre pour former un tore.

8. Dispositif de chauffage à induction selon la revendication 5, la première portion du noyau inducteur et la deuxième portion du noyau inducteur se couplant l'une à l'autre pour former un cylindre.

9. Dispositif de chauffage à induction selon la revendication 1, l'ensemble de couplage inductif comprenant un mécanisme de blocage configuré pour fixer l'ensemble câble à l'alimentation.

10. Dispositif de chauffage à induction selon la revendication 9, le mécanisme de blocage étant un connecteur de blocage à torsion.

11. Dispositif de chauffage à induction selon la revendication 9, le mécanisme de blocage comprenant un premier élément de blocage connecté à l'alimentation et un deuxième élément de blocage connecté au manchon de couplage inductif de façon à ce que le couplage du premier élément de blocage au deuxième élément de blocage forme une connexion de blocage séparable.

12. Dispositif de chauffage à induction selon la revendication 11, le premier élément de blocage étant formé comme faisant partie d'un boîtier de l'alimentation.
